# DEMANDE DE BREVET EUROPEEN

(11) **EP 1 056 035 A1**
(43) Date de publication de la demande: **29.11.2000**
(21) Numéro de dépôt: 99410072.5
(22) Date de dépôt: 25.05.1999
(51) Int. Cl.: G06K 7/00

(54) **Connecteur à atterrissage**

(71) Demandeur: ASCOM MONETEL S.A., 07500 Guilherand-Granges (FR)
(72) Inventeur: Le Gal, Patrick, 07130 Saint Peray (FR)
(74) Mandataire: de Beaumont, Michel

(57) **Abrégé**

L'invention concerne un connecteur comprenant un support isolant (30), un ensemble de lames conductrices élastiques (14) fixées au support par une première extrémité, l'autre extrémité de chaque lame comportant un plot (12), et un moyen commandable (32) qui, au repos, sollicite les lames de manière à déplacer les plots dans une même direction, et qui, lorsqu'il est commandé, libère les lames.

## Description

La présente invention concerne un connecteur pour des lecteurs de carte à puce.

Un lecteur de carte à puce comporte un ensemble de plots de contact reliés directement ou indirectement à des circuits du lecteur destinés à établir une liaison électrique avec des zones conductrices situées à la surface de la carte et reliées à des bornes de la puce contenue dans la carte.

Dans un lecteur de carte à puce tel qu'un lecteur de carte à puce à insertion manuelle, la carte interagit, lors de son insertion dans un chemin de guidage du lecteur, avec des moyens mécaniques qui mettent en contact les plots du lecteur et les zones conductrices de la carte. De manière classique, l'ensemble des plots d'un lecteur est rassemblé en un connecteur constituant un composant fabriqué isolément. Plusieurs types de connecteurs sont disponibles sur le marché. Les plots de contact d'un connecteur classique sont typiquement montés aux extrémités de lames élastiques dont les autres extrémités sont montées dans un support isolant.

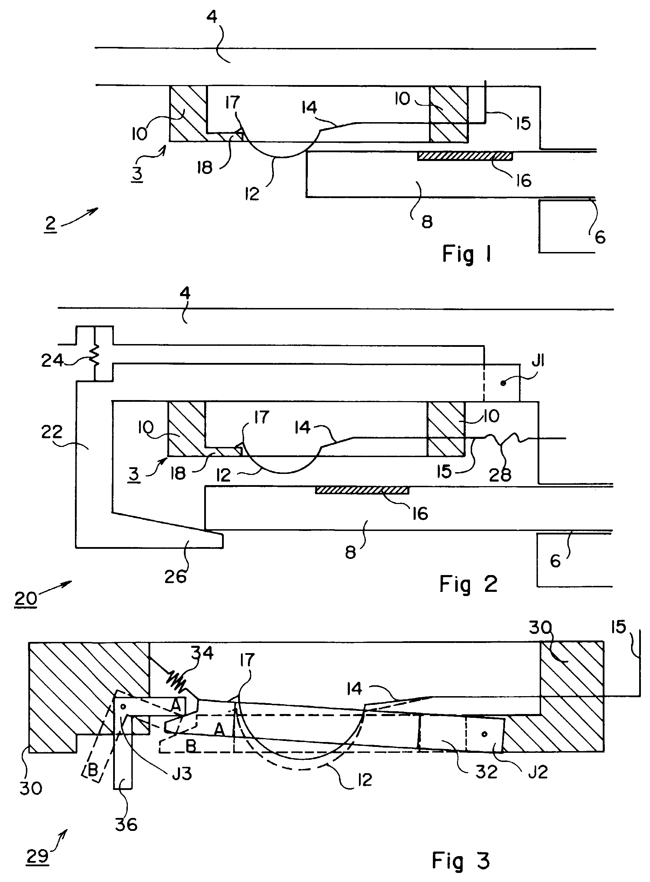

La figure 1 est un schéma simplifié destiné à illustrer le principe de fonctionnement d'un lecteur 2 qui utilise un connecteur classique 3 fixé à un bâti 4, dans lequel est ménagé un chemin de guidage 6 d'une carte à puce 8. Le connecteur 3 comprend un support isolant plat ayant la forme d'un cadre 10. Des lames conductrices souples 14 dont une extrémité porte un plot de contact 12 sont fixées à un montant du cadre 10. Les lames élastiques 14 sont prolongées à l'extérieur du cadre 10 par des broches de connexion électrique 15. Les lames élastiques 14 sont prévues pour maintenir de manière élastique les plots 12 dans un même plan, parallèle au plan du cadre 10. Pour cela, le cadre 10 comprend classiquement un rebord 18 sur lequel l'extrémité 17 de chaque lame élastique 14 vient reposer, de manière à comprimer légèrement chacune des lames élastiques.

Le connecteur 3 est fixé au bâti 4 de manière que les plots de contact 12 se trouvent sur le chemin suivi par la carte. Lors de l'insertion de la carte 8 dans le lecteur 4, les plots 12 sont d'abord écartés par le bord de la carte, puis ils frottent sur la carte avant de venir porter sur les zones conductrices 16 de la carte. Chaque insertion de la carte provoque un frottement du bord et de la partie avant de la carte sur les plots de contact du lecteur. Ces frottements provoquent une usure des plots qui limite la durée de vie du lecteur. De plus, un tel lecteur est particulièrement sensible aux actes de vandalisme. Par exemple une lime ou une pièce de monnaie introduite dans le chemin de guidage peut détériorer les plots de contact. Une solution pour résoudre ces problèmes consiste à rendre le connecteur 3 mobile par rapport à la carte.

La figure 2 est un schéma simplifié destiné à illustrer le principe de fonctionnement d'un lecteur 20 du type dit "à atterrissage". En figure 2, de mêmes références désignent de mêmes éléments qu'en figure 1. Le connecteur 3 est fixé à une pièce mobile 22, ce qui permet de l'éloigner du chemin de guidage 6 lorsqu'aucune carte n'est présente dans le lecteur, et de l'amener en position de contact seulement quand on introduit une carte dans le lecteur.

La pièce mobile 22 est articulée sur le bâti 4 autour d'un axe J1. Un ressort 24 exerce une force de rappel sur la pièce mobile 22 de manière à l'amener dans une position de repos telle que les plots de contact 12 du connecteur 3 sont situés en dehors du chemin suivi par la carte. La pièce mobile 22 est munie d'un levier 26 conçu pour, lorsqu'on introduit la carte 8, interagir avec le bord de la carte de manière à déplacer la pièce mobile 22 et à rapprocher les plots de contact 12 des zones conductrices 16 de la carte. Le levier 26 est prévu pour que les plots de contact 12 ne frottent sur la carte que lors de la phase finale de son insertion, ce qui diminue leur usure. En outre, dans la position de repos de la pièce mobile 22, les plots 12 sont en retrait par rapport au chemin de la carte et ils sont protégés du vandalisme.

Il existe de nombreuses variantes de lecteurs à atterrissage. La caractéristique générale de ces lecteurs est que le connecteur dans son ensemble est solidaire d'une pièce mobile, de sorte que, au repos, les plots du connecteur sont en retrait par rapport au trajet d'une carte. Quel que soit le système adopté, un lecteur à atterrissage est relativement complexe à fabriquer. En effet, la pièce mobile 22 et le levier 26 doivent être réalisés avec le plus grand soin et le connecteur 9 doit être positionné avec précision sur la pièce mobile 22. De plus, l'articulation de la pièce mobile 22 par rapport au bâti 4 doit être à la fois précise et suffisamment robuste pour supporter le poids combiné de la pièce 22 et du connecteur 9 sans déformation ni usure. De plus également, les broches de connexion électrique 15 du connecteur 9 doivent dans un tel lecteur être reliées aux circuits électriques du lecteur (non représentés) par une liaison souple 28. Une telle liaison souple fragilise le lecteur et le rend plus coûteux. Enfin, dans un tel lecteur, la tension du ressort de rappel 24 doit être déterminée avec soin. Si cette tension est trop faible, la position de repos de la pièce mobile 22 ne sera pas correcte, et si cette tension est trop forte, elle pourra entraîner un retour intempestif de la pièce mobile 22 dans sa position de repos et une éjection de la carte.

Un objet de la présente invention est de prévoir un connecteur, dont les plots ont une position de repos et une position de contact, qui puisse être fixé au bâti d'un lecteur ne comportant pas de pièce mobile, tout en conférant à ce lecteur les avantages d'un lecteur à atterrissage.

Un autre objet de la présente invention est de prévoir un connecteur qui soit interchangeable avec un connecteur classique.

Un autre objet de la présente invention est de prévoir un tel connecteur qui permette de réaliser un lecteur à atterrissage non susceptible d'éjecter une carte de manière intempestive.

Pour atteindre ces objets, la présente invention prévoit un composant constituant un connecteur pouvant être identique, dans son montage et dans son encombrement, à un connecteur classique mais comprenant des moyens autonomes permettant de mettre les plots dans une position de retrait ou dans une position de contact. Ce connecteur, associé à un lecteur de carte sans pièces mobiles, permet de conférer à ce lecteur les propriétés d'un lecteur à atterrissage.

Plus particulièrement, la présente invention prévoit un connecteur comprenant un support isolant, un ensemble de lames conductrices élastiques fixées au support par une première extrémité, l'autre extrémité de chaque lame comportant un plot, et un moyen commandable qui, au repos, sollicite les lames de manière à déplacer les plots dans une même direction, et qui, lorsqu'il est commandé, libère les lames.

Selon un mode de réalisation de la présente invention, ledit moyen commandable est commandé par un mécanisme d'entraînement.

Selon un mode de réalisation de la présente invention, le support est un cadre, le moyen commandable consiste en une pièce mobile sollicitée de manière élastique pour agir sur les lames afin de solliciter les plots de contact vers une position comprise entre les montants du cadre, et le mécanisme d'entraînement est un levier qui, lorsqu'il est actionné, s'oppose à la sollicitation élastique de la pièce mobile, pour permettre aux plots de contact de s'écarter du cadre.

Selon un mode de réalisation de la présente invention, le connecteur comprend deux ensembles de lames élastiques fixées sur deux montants opposés du cadre et situées en regard, le levier est relié au cadre par une articulation au niveau d'un premier desdits deux montants du cadre, et la pièce mobile, située à l'intérieur du cadre, est articulée sur le cadre autour d'un axe proche du second desdits montants du cadre.

Selon un mode de réalisation de la présente invention, le connecteur comprend deux ensembles de lames élastiques fixées sur des montants opposés du cadre et situées en regard, la pièce mobile, située à l'intérieur du cadre, est articulée sur le cadre autour d'un axe proche d'un desdits deux montants du cadre, le levier est solidaire de la pièce mobile et situé à proximité de cet axe.

Selon un mode de réalisation de la présente invention, la sollicitation élastique est obtenue au moyen d'une lame de ressort disposée entre la pièce mobile et le cadre.

Selon un mode de réalisation de la présente invention, le connecteur présente un même encombrement qu'un connecteur classique comportant un même nombre de plots et il est muni des mêmes moyens de montage.

Selon un mode de réalisation de la présente invention, le connecteur comprend un moyen s'étendant sensiblement sur toute la longueur du cadre et qui, lorsque les lames sont sollicitées, occupe une position au delà du niveau du plan du cadre et au delà desdits plots.

La présente invention vise également un lecteur de carte à puce comprenant un bâti dans lequel est ménagé un chemin de guidage d'une carte dont la surface comporte des zones conductrices, un connecteur tel que mentionné ci-dessus, fixé au bâti de sorte que le mécanisme d'entraînement est situé de manière à être actionné par le bord de la carte lors de l'insertion de la carte pour provoquer le déplacement des plots de contact jusqu'aux zones conductrices de la surface de la carte.

Selon un mode de réalisation de la présente invention, le mécanisme d'entraînement est monté de sorte que, après avoir été actionné par le bord de la carte lors de l'insertion de la carte, il sort du chemin de la carte et vient glisser à la surface de la carte.

Selon un mode de réalisation de la présente invention, les lames du connecteur sont reliées au bâti par une liaison électrique rigide.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1, décrite précédemment, est un schéma destiné à illustrer le principe de fonctionnement d'un lecteur de carte à puce classique ;
la figure 2, décrite précédemment, est un schéma destiné à illustrer le principe de fonctionnement d'un lecteur "à atterrissage" classique ;
la figure 3 est un schéma destiné à illustrer le principe d^{'}un connecteur selon la présente invention ;
les figures 4 à 6 sont des schémas destinés à illustrer le principe de fonctionnement d'un lecteur de carte utilisant le connecteur de la figure 3 ;
la figure 7 représente une vue de dessus d'un mode de réalisation du connecteur de la figure 3 ;
les figures 8A et 8B représentent des vues de côté en coupe selon des axes AA et BB du connecteur de la figure 7 au repos ;
les figures 9A et 9B représentent des vues de côté en coupe selon des axes AA et BB du connecteur de la figure 7 en fonctionnement ;
la figure 10 illustre une variante du connecteur représenté en figure 8B ; et
la figure 11 illustre une autre variante du connecteur représenté en figure 8B.

La figure 3 est un schéma simplifié destiné à illustrer le principe d'un connecteur 29 selon la présente invention. Le connecteur 29 comprend un cadre plat 30 qui peut présenter exactement le même encombrement qu'un connecteur classique. Selon la présente invention, une pièce mobile 32, articulée sur le cadre autour d'un axe J2, interagit avec les extrémités 17 des lames mobiles 14. La pièce mobile 32 permet de rabattre les lames mobiles 14 vers l'intérieur du cadre 30 sous l'action d'un ressort 34 reliant le cadre et la pièce mobile. Le ressort 34 maintient les lames élastiques et les plots 12 dans une position de repos A, en retrait. Un levier 36 à deux branches est articulé sur le cadre 30 autour d'un axe J3. Dans le mode de réalisation représenté, la première branche est prévue pour, dans la position de repos A, être plaquée dans une position horizontale par la pièce mobile 32 et servir de butée à la pièce 32. La deuxième branche du levier 36 dépasse hors du cadre 30. La pièce mobile 32 et le levier 36 sont de taille et de poids réduits, ce qui rend leur articulation sur le cadre 30 facile à réaliser de manière précise et robuste.

Lorsque l'on exerce une pression pour incliner la deuxième branche du levier 36, sa première branche relève la pièce mobile 32 en s'opposant à l'action du ressort 34. Quand on relève la pièce 32, les lames élastiques 14 se redressent et les plots de contact 12 sortent du cadre 30. On peut incliner le levier 36 jusque dans une position B où la pièce mobile 32 est relevée suffisamment pour qu'elle n'exerce plus de pression sur les lames élastiques 14. Les plots de contact 12 sont alors dans leur position de contact. Ainsi, les plots de contact du connecteur selon la présente invention peuvent prendre une position de repos, dans laquelle ils sont protégés à l'intérieur du connecteur, et une position de contact.

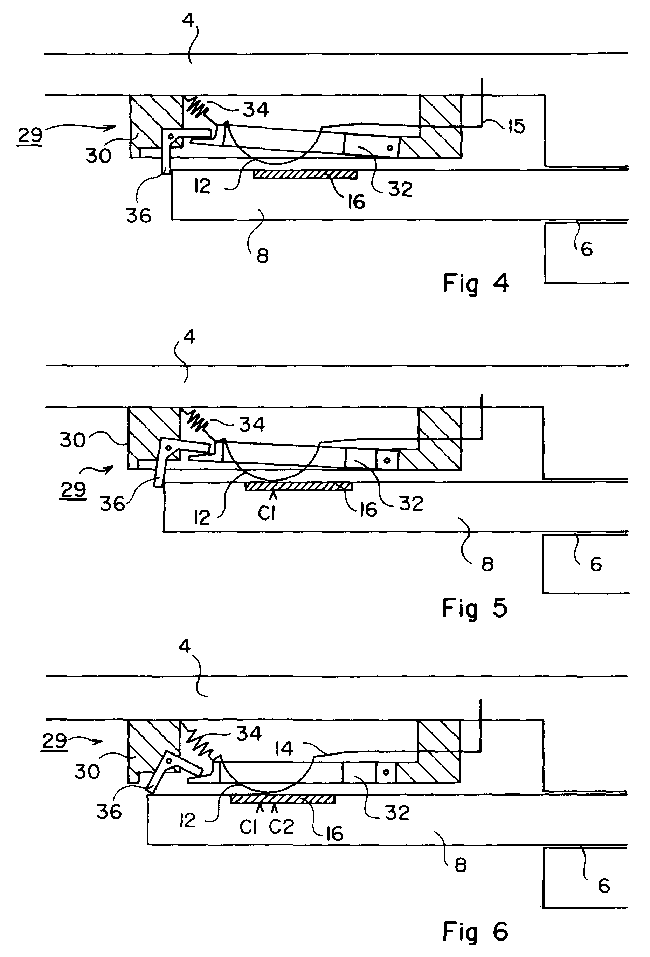

Les figures 4 à 6 représentent un lecteur de carte du type de celui de la figure 1, dans lequel le connecteur classique 3 a été remplacé par un connecteur 29 selon la présente invention. De mêmes références représentent de mêmes éléments en figures 1 et 3 à 6. Le connecteur 29 est relié aux circuits électriques du lecteur (non représentés) par des connexions électriques rigides de ses broches 15. Le connecteur 29 est fixé au bâti 4 de manière que, en position de repos, la deuxième branche du levier 36 se trouve dans le chemin de la carte 8.

La figure 4 illustre la fin d'une première étape de l'insertion de la carte dans le chemin 6, lorsque le bord de la carte arrive en contact avec la deuxième branche du levier 36. Les plots de contact 12, rentrés entre les montants du cadre 30, ne sont pas en contact avec la carte.

La figure 5 illustre la fin d'une deuxième étape de l'insertion de la carte 8 dans le chemin 6. Lors de la deuxième étape, le bord de la carte fait pression sur le levier 36, qui agit sur la pièce mobile 32 de manière à faire sortir les plots 12 du cadre 30. L'emplacement du levier 36 est tel que, au fur et à mesure que le levier est incliné par le bord d'une carte qui est insérée, les plots se rapprochent de la surface de la carte au niveau des zones conductrices de la carte. La deuxième étape se termine lorsque les plots de contact 12 viennent porter sur les zones conductrices 16 de la carte, en des points de contact initiaux C₁.

La figure 6 illustre la fin d'une troisième étape de l'insertion de la carte 8 dans le chemin 6. Lors de cette troisième étape, le bord de la carte 8, qui fait toujours pression sur le levier 36, continue d'incliner ce dernier. Cela a pour effet de rapprocher la pièce mobile 32 de la surface de la carte. On notera que, depuis la fin de la deuxième étape, les plots 12 portent sur les zones conductrices 16 de la carte 8, ce qui entraîne que les laines élastiques 14, solidaires des plots 12, ne bougent plus lorsque la pièce mobile 32 continue de bouger. On notera qu'à partir de l'instant où les plots 12 entrent en contact avec la surface de la carte, l'élasticité des laines élastiques 14 maintient les plots plaqués sur la carte. Lors de la troisième étape de l'insertion de la carte, les plots de contact 12 immobiles glissent avec frottement depuis leur point de contact initial C₁ jusqu'à un point de contact final C₂ sur les zones conductrices 16 de la carte en mouvement. Ce glissement avec frottement est important car il permet le nettoyage des plots de contact et des zones conductrices de la carte.

La troisième étape prend fin lorsque le levier 36 est suffisamment incliné pour que sa deuxième branche passe pardessus le bord de la carte et vienne glisser à la surface de la carte 8. A partir de cet instant, la force de rappel exercée par le ressort 34 sur le levier 36 s'exerce sur la carte 8 dans une direction telle qu'elle ne peut plus provoquer d'éjection intempestive de la carte. Le connecteur pourra en outre comporter une butée de fin de course (non représentée), et un détecteur de fin de course (non représenté) placé de manière à être activé par le bord de la carte 8 à la fin de la troisième étape, pour relier électriquement les plots 12 aux circuits électriques du lecteur. On notera que, si le connecteur ne comprend pas de butée de fin de course, la carte pourra continuer sa course vers l'intérieur du lecteur dans le chemin d'insertion, par-dessus le levier 36 incliné. Un tel connecteur pourra être utilisé pour réaliser un lecteur susceptible "d'avaler" une carte, par exemple pour retirer de la circulation une carte défectueuse ou coupée.

Le retrait de la carte se fait selon une suite d'étapes sensiblement inverses de celles que l'on vient de décrire.

Comme cela vient d'être décrit en relation avec les figures 4 à 6, un lecteur de carte à puce simple muni d'un connecteur selon la présente invention se comporte conne un connecteur à atterrissage. En effet, les plots sont amenés au contact des zones conductrices de la carte à puce lors de son insertion dans le lecteur de manière qu'ils ne frottent pas avec le bord ou la surface de la carte. De même, les plots sont, au repos, rentrés entre les montants du cadre du connecteur et protégés contre le vandalisme.

Un avantage d'un connecteur selon la présente invention est ainsi de permettre de réaliser un lecteur de carte à puce qui présente les avantages d'un lecteur à atterrissage sans avoir besoin d'une pièce mobile sur laquelle est fixé le connecteur. La suppression d'une telle pièce mobile permet de construire un lecteur à atterrissage moins coûteux, plus fiable, et plus petit qu'un lecteur à atterrissage classique.

Un autre avantage d'un connecteur selon la présente invention est que, étant de la taille d'un connecteur classique, il permet par exemple de fabriquer des lecteurs à atterrissage immédiatement à partir d'une chaîne de fabrication de lecteurs simples, sans pièce mobile. Un connecteur selon la présente invention peut également, pour la même raison, permettre de transformer facilement d'anciens lecteurs simples en lecteurs à atterrissage.

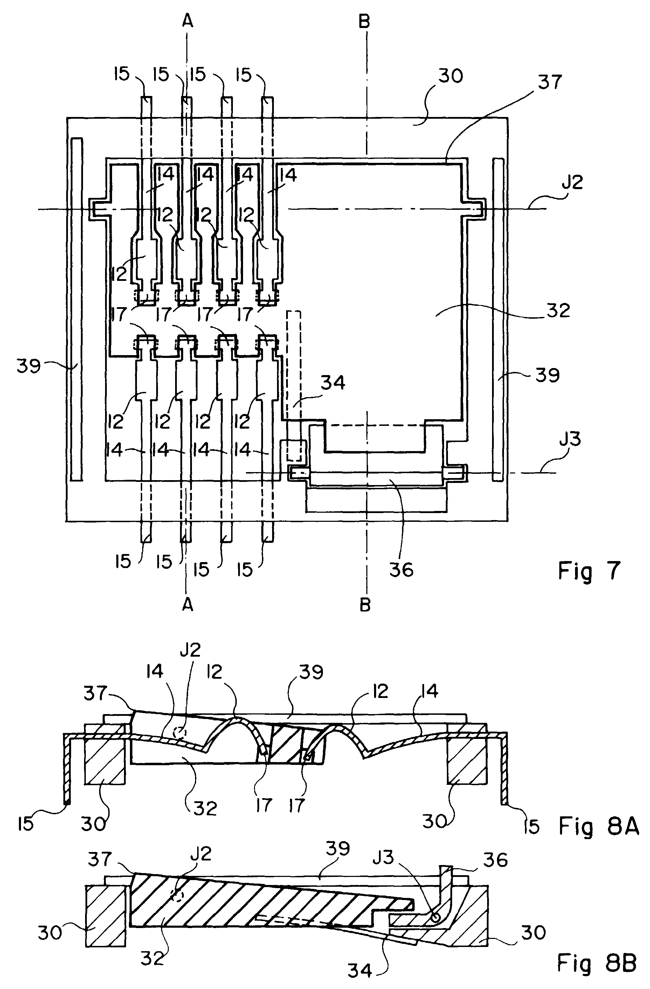

La figure 7 représente une vue de dessus en coupe d'un mode de réalisation du connecteur de la figure 3. Le cadre 30 entoure ici deux groupes de quatre lames élastiques 14 dont chacune porte un plot 12. Les lames élastiques, parallèles entre elles, sont fixées sur des premières moitiés, situées en regard, de premier et deuxième montants du cadre. Les lames élastiques 14 sont prolongées par des broches de connexion électrique 15 à l'extérieur du cadre. On notera que le cadre 30 est un cadre standard utilisé pour réaliser des connecteurs à 8 ou à 16 plots. Ainsi, les huit lames élastiques 14 n'occupent qu'une première moitié de l'intérieur du cadre 30.

Le levier 36, articulé sur le cadre autour d'un axe J3, est relié à l'intérieur du cadre par une articulation occupant la seconde moitié du premier montant. La pièce mobile 32, située à l'intérieur du cadre, est articulée sur le cadre autour d'un axe J2 proche du deuxième montant. Une première moitié de la pièce mobile, la partie de la pièce mobile située entre les premières moitiés des premier et deuxième montants, est ajourée de manière à ne porter que sur les extrémités 17 des lames élastiques 14. On notera que les extrémités 17 recourbées représentées dans les schémas de principe des figures 3 à 6 sont ici remplacées par des extrémités 17 droites qui comportent des encoches latérales. Les extrémités 17 sont emprisonnées dans des cavités verticales de la pièce mobile 32, resserrées au niveau des encoches. Ces cavités verticales, tentées par le haut, laissent les extrémités 17 coulisser vers le bas, par exemple lorsque la pièce 32 est amenée en position relevée, et elles permettent d'entraîner les extrémités 17 vers le bas lorsque la pièce 32 est abaissée. La seconde moitié de la pièce mobile, située entre les secondes moitiés des premier et deuxième montants, se prolonge jusqu'à recouvrir la première branche du levier 36. Le ressort 34 est une lame de ressort fixée à la seconde moitié de la pièce mobile 32, qui porte sur le cadre 30.

Les figures 8A et 8B représentent respectivement des vues de côté en coupe selon les axes AA et BB du connecteur de la figure 7, à la fin de la première étape décrite en relation avec la figure 4. On notera qu'au repos, les plots 12 ne sont ici pas complètement rentrés entre les montants du cadre 30. Les plots sont hors du chemin de la carte et ils sont hors de portée du bord d'une carte plane lors de son insertion. Cependant, une carte peut être déformée dans le sens de l'insertion et présenter une partie centrale qui dépasse du chemin d'insertion de la carte. Une carte déformée de la sorte peut venir frotter sur les plots au repos. Une solution peut être de former dans le bâti 4 un chemin d'insertion qui, au niveau du connecteur, maintient plane toute carte insérée. La formation d'un tel chemin d'insertion peut cependant être coûteuse. Ainsi, selon la présente invention on prévoit qu'une arête 37 de la pièce mobile 32, parallèle à l'axe J2 et s'étendant sensiblement sur toute la longueur du cadre, est plus éloignée du plan du cadre que les plots lorsque la pièce mobile est au repos. Cette arête est prévue pour repousser une partie centrale d'une carte insérée, susceptible de venir frotter contre les plots.

De même, une carte peut être déformée perpendiculairement au sens de l'insertion et présenter un bord courbé susceptible de venir frotter sur les plots au repos. Selon la présente invention, deux rails 39 parallèles au sens de l'insertion sont fixés aux montants du cadre 30, de manière qu'une carte insérée porte sur la surface de ces rails. La hauteur des rails 39 est telle que la surface des rails est plus éloignée du plan du cadre que les plots lorsque la pièce mobile est au repos. Ainsi, le bord d'une carte courbé en direction des plots viendra frotter à la surface des rails 39 et les plots seront protégés. De tels rails permettent en outre de limiter l'écrasement des plots contre la carte, qui peut être trop fort en cas d'assemblage peu précis du connecteur par rapport au chemin d'insertion. Les rails 39 facilitent ainsi également l'assemblage du connecteur 29 dans le lecteur.

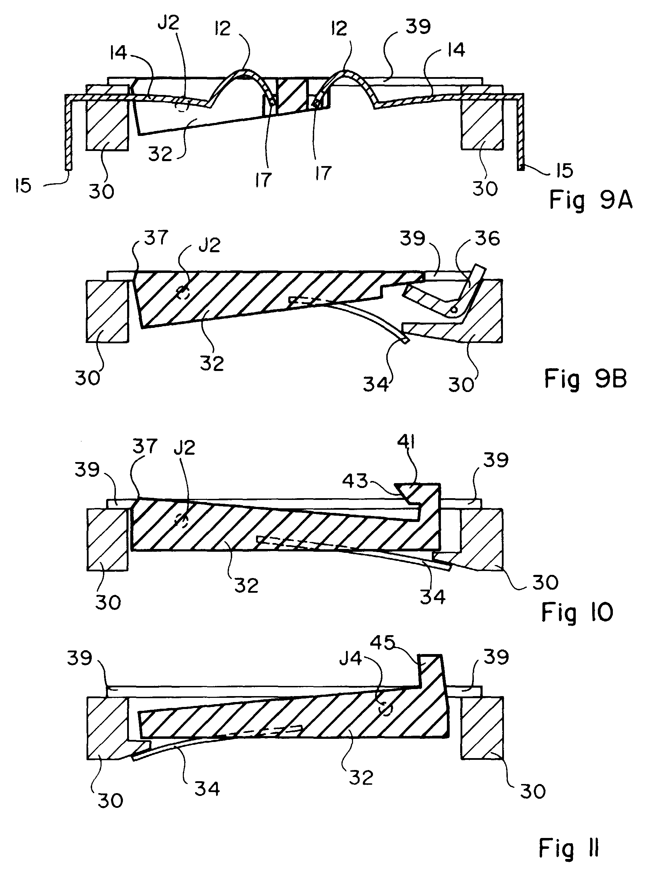

Les figures 9A et 9B représentent respectivement des vues de côté en coupe selon les axes AA et BB du connecteur de la figure 7, à la fin de la troisième étape décrite en relation avec la figure 6. On notera que lorsque la pièce mobile 32 est relevée, elle ne porte plus sur les extrémités 17 et ainsi, elle n'interagit plus avec les lames mobiles 14. La position des plots 12 est alors uniquement déterminée par les lames élastiques 14.

Bien entendu, la présente invention est susceptible de diverses variantes et modifications qui apparaîtront à l'homme du métier.

La figure 10 illustre une variante du connecteur selon la présente invention dans laquelle un levier 41 est solidaire de l'extrémité de la pièce mobile 32 distale de l'axe J2. Le levier 41 comprend un plan incliné 43 prévu pour dépasser dans le chemin d'insertion de la carte lorsque la pièce mobile 32 est au repos. Le plan incliné 43 est prévu pour être repoussé vers le haut par le bord d'une carte insérée, de manière à rapprocher la pièce mobile de la carte. Une telle solution permet de faire l'économie du levier 36 articulé cité précédemment. On notera que le levier 41 peut ici servir de butée de fin de course

La figure 11 illustre une autre variante du connecteur selon la présente invention dans laquelle la pièce mobile 32 est articulée sur le cadre 30 autour d'un axe J4 proche du premier montant. La pièce mobile 32 comprend un levier 45 prévu pour dépasser dans le chemin d'insertion de la carte lorsque la pièce mobile 32 est au repos. Le levier 45 est placé sur la pièce mobile 32 de manière que la pression exercée par le bord d'une carte insérée fasse basculer la pièce mobile et libère les lames élastiques. Selon cette variante, le levier 45 agit sur la pièce mobile 32 à la manière de la deuxième branche du levier 36 sur le levier 36 en figures 3 à 9B.

A titre de variante également, le ressort 34 représenté aux figures 7 à 11 comme une lame de ressort pourra avantageusement être remplacé par un ressort à boudin permettant de fournir une force de rappel constante. Enfin, on pourra donner aux extrémités 17 des lames élastiques 14 la forme d'un crochet, comme en figures 3 à 6, ou toute autre forme adaptée permettant de réduire l'usure de la pièce mobile 32 en ses points de contact avec les extrémités 17. On a représenté un connecteur ayant les mêmes dimensions qu'un connecteur standard, mais on pourra adapter la présente invention à un connecteur ayant une taille ou un nombre de plots différents. Dans ce cas bien sûr un connecteur selon la présente invention pourra ne plus être compatible avec un connecteur standard.

Enfin, la description précédente ne concerne que l'utilisation d'un connecteur selon la présente invention dans un lecteur de carte à puce à insertion manuelle, mais on peut bien sûr envisager son utilisation dans un lecteur de carte à puce motorisé.

## Revendications

1. Connecteur comprenant :
un support isolant (30),
un ensemble de lames conductrices élastiques (14) fixées au support par une première extrémité, l'autre extrémité de chaque lame comportant un plot (12), et
un moyen commandable (32) qui, au repos, sollicite les lames de manière à déplacer les plots dans une même direction, et qui, lorsqu'il est commandé, libère les lames.

2. Connecteur selon la revendication 1, caractérisé en ce que :
le support est un cadre,
le moyen commandable consiste en une pièce mobile (32) sollicitée de manière élastique pour agir sur les lames afin de solliciter les plots de contact vers une position comprise entre les montants du cadre, et
le moyen commandable est commandé par un levier (36) qui, lorsqu'il est actionné, s'oppose à la sollicitation élastique de la pièce mobile, pour permettre aux plots de contact de s'écarter du cadre.

3. Connecteur selon la revendication 2, comprenant deux ensembles de lames élastiques (14) fixées sur deux montants opposés du cadre et situées en regard, caractérisé en ce que :
le levier est relié au cadre par une articulation au niveau d'un premier desdits deux montants du cadre, et
la pièce mobile (32), située à l'intérieur du cadre, est articulée sur le cadre autour d'un axe (J2) proche du second desdits montants du cadre.

4. Connecteur selon la revendication 2, comprenant deux ensembles de lames élastiques (14) fixées sur des montants opposés du cadre et situées en regard, caractérisé en ce que :
la pièce mobile (32), située à l'intérieur du cadre, est articulée sur le cadre autour d'un axe (J4) proche d'un desdits deux montants du cadre,
le levier (45) est solidaire de la pièce mobile et situé à proximité de cet axe.

5. Connecteur selon l'une quelconque des revendications précédentes, caractérisé en ce que la sollicitation élastique est obtenue au moyen d'une lame de ressort (34) disposée entre la pièce mobile et le cadre (30).

6. Connecteur selon l'une quelconque des revendications précédentes, caractérisé en ce qu'il présente un même encombrement qu'un connecteur classique comportant un même nombre de plots et en ce qu'il est muni des mêmes moyens de montage.

7. Connecteur selon l'une quelconque des revendications précédentes, caractérisé en ce qu'il comprend un moyen (37, 39) s'étendant sensiblement sur toute la longueur du cadre et qui, lorsque les laines sont sollicitées, occupe une position au delà du niveau du plan du cadre et au delà desdits plots.

8. Lecteur de carte à puce comprenant :
un bâti (4) dans lequel est ménagé un chemin de guidage (6) d'une carte (8) dont la surface comporte des zones conductrices (16), et
un connecteur (29) selon l'une quelconque des revendications 1 à 7.

9. Lecteur de carte à puce selon la revendication 8, caractérisé en ce que le moyen commandable (32) du connecteur (29) est commandé par un levier (36), et en ce que le connecteur est fixé au bâti de sorte que le levier est situé de manière à être actionné par le bord de la carte lors de l'insertion de la carte pour provoquer le déplacement des plots de contact jusqu'aux zones conductrices de la surface de la carte.

10. Lecteur de carte à puce selon la revendication 9, dans lequel le levier est monté de sorte que, après avoir été actionné par le bord de la carte lors de l'insertion de la carte, il soft du chemin de la carte et vient glisser à la surface de la carte.

11. Lecteur de carte à puce selon la revendication 9 ou 10, caractérisé en ce que les lames du connecteur sont reliées au bâti par une liaison électrique rigide.
